Europäisches Patentamt

European Patent Office

Office européen des brevets

(11) Publication number: **0 426 498 A1**

# EUROPEAN PATENT APPLICATION

(21) Application number: 90312057.4

(22) Date of filing: 02.11.90

(51) Int. Cl.5: **A62C 27/00**, B60K 7/00

The title of the invention has been amended (Guidelines for Examination in the EPO, A-III, 7.3).

(30) Priority: 02.11.89 IE 3524/89

(43) Date of publication of application:
08.05.91 Bulletin 91/19

(84) Designated Contracting States:
AT BE CH DE DK ES FR GB GR IT LI LU NL SE

(71) Applicant: TECHNOLOGY INVESTMENTS
OVERSEAS LIMITED
Trim
County Meath(IE)

(72) Inventor: Timoney, Eanna Pronsias
St. Anthony's Boyne Road
Navan, County Meath(IE)

(74) Representative: Waldren, Robin Michael et al
Marks & Clerk, 57-60 Lincoln's Inn Fields
London WC2A 3LS(GB)

(54) **Fire fighting vehicle.**

(57) An airport crash rescue vehicle (1) has a wheeled chassis (2). Mounted on the chassis (2) is a diesel engine (5) which drives an electric generator (6) for generating an electric power supply. A number of traction motors (8) are powered by the generator (6). Each traction motor (8) is mounted on a drive axle (3) on the chassis (2) to drive a pair of wheels on the axle (3). A water tank (30) and foam tank (31) are mounted on the chassis (2). A pump (10) driven by a motor (11) powered by the generator (6) delivers water and foam from the tanks (30,31) to a spray monitor (33) on the vehicle (1). The traction motors (8) and pump (10) can be operated independently and/or simultaneously as required. Other rescue equipment carried on the vehicle (1) is also powered by the generator (6).

EP 0 426 498 A1

## IMPROVEMENTS IN AND RELATING TO VEHICLES

This invention relates to improvements to vehicles and in particular to fire fighting vehicles and especially to an airport crash rescue vehicle.

A number of different types of airport crash rescue vehicles are available for dealing with emergencies such as airplane crashes and fires. These vehicles may in some cases carry 10 to 15 tonnes of water and foam in tanks together with pumping and spray equipment. In an emergency such as an airplane crash, it is vital to get the vehicle to the crash site as quickly as possible, therefore rapid acceleration of the vehicle during the first two minutes of action is of vital importance. It is also necessary to be able to spray foam when the vehicle is moving so that the foam spray is in operation as the vehicle approaches the crash site.

In one particular type of known vehicle power from a diesel engine is delivered through a power divider which splits the output from the engine to drive the vehicle wheels and a pump to deliver the foam. Drive is transmitted to the wheels and the pump via suitable gear boxes and propeller shafts extending along the vehicle chassis. A disadvantage of this drive transmission is that it is relatively complex. As the tanks for foam and water are mounted on the chassis in order to keep the centre of gravity of the vehicle as low as possible for optimum handling and manoeuvrability a base portion of the tank must be formed with indentations to accomodate gear boxes and propeller shafts which project above the tank bottom.

Further, an inlet of the pump needs to be sited below the tank outlet to provide a positive head at the pump. With the mechanical drive transmission this can pose problems for siting the pump as there is a limit to the positions and orientation at which the pump can be mounted on the chassis.

In conventional arrangements pump control stations are provided in the vehicle cab and at each side of the vehicle. The controls operate the throttle on the engine to adjust pump output. Mechanical linkages extend between the control stations for synchronised operation of the controls at all the control stations. It will be appreciated that the routing of these mechanical linkages is relatively complex. It is possible that while the vehicle is stationary and the pump is being operated from a side of the vehicle, the drive to the wheels may accidentally become engaged and the vehicle has moved without a driver in the cab.

It is an object of this invention to provide an improved fire fighting vehicle which overcomes these problems.

According to the invention there is provided a fire fighting vehicle comprising a wheeled chassis, generator means mounted on the chassis for generating an electric power supply, vehicle drive means having at least one traction motor powered by the generator means, each traction motor drivably connected to a wheel or wheels of the vehicle, and fire fighting machinery on the vehicle powered by the generator means, the drive means and machinery being operably independently and/or simultaneously as required.

The invention provides a fire fighting vehicle having a greatly simplified power transmission system. The generator means which is, for example, an engine driven electric generator can be sited at any convenient location on the chassis of the fire fighting vehicle and in any desired orientation overcoming limitations of a mechanical drive transmission. Further the generator means can be mounted on the chassis as low as is permitted by ground clearance requirements thus providing a vehicle with a low centre of gravity to improve the stability of the vehicle, particularly when manoeuvring at higher speeds. Similarly the fire fighting machinery can be located at the most convenient location and orientation on the chassis. The fact that the drive means and the fire fighting machinery are powered independently means that the vehicle cannot be accidentally moved while operating the fire fighting machinery.

In one embodiment of the invention the generator means has a common power output connected to the drive means and the machinery. In an alternative arrangement the generator means may have separate power outputs for the drive means and the fire fighting machinery. For example, separate engine driven generators may be provided for the drive means and for the fire fighting machinery.

In a further embodiment the machinery comprises a pump.

In a particularly preferred embodiment the vehicle has a reservoir tank for a fire extinguishing material mounted on the chassis, an inlet of the pump being connected to an outlet of the tank. Tank construction can be simplified as electric power cables can be easily routed on the vehicle. There is no need for forming indentations in the tank such as may be required with mechanical drives to accommodate gear boxes and the like drive transmission machinery.

In a further embodiment control means is provided for operation of the pump independently of the drive means, the control means having a number of electrically interconnected pump control stations on the vehicle, each control station having controls for operating the pump. No mechanical linkages are required between control stations. The electrical connections can be simply and easily routed around the vehicle.

In another embodiment control means is provided to regulate the speed and power output of each traction motor.

In another embodiment each traction motor is mounted on a drive axle to drive a pair of wheels on the axle.

In a further embodiment a number of drive axles are provided on the chassis drivably connected in tandem, each axle having a pair of wheels, a traction motor being mounted on one of the drive axles to drive wheels on all of the interconnected axles. The advantages of these features is in allowing fewer traction motors to be used for driving the vehicle. Further, the traction motors can be centrally mounted on the vehicle for improved weight distribution.

In another aspect of the invention there is provided a vehicle comprising a wheeled chassis, generator means mounted on the chassis for generating an electric power supply, vehicle drive means having at least one traction motor powered by the generator means, each traction motor drivably connected to a wheel or wheels of the vehicle, and machinery on the vehicle powered by the generator means, the drive means and machinery being operable independently and/or simultaneously as required.

In a further embodiment the drive means includes a regenerative braking system.

The invention will be more clearly understood from the following description of some embodiments thereof, given by way of example only, with reference to the accompanying drawings, in which;

Fig. 1 is a front perspective view of an airport crash rescue vehicle according to the invention,

Fig. 2 is a side diagrammatic view of a power transmission system mounted on the vehicle chassis,

Fig. 3 is a perspective view of a drive axle of the vehicle, and

Fig. 4 is a diagrammatic side view similar to Fig. 2 of a power transmission system of another vehicle.

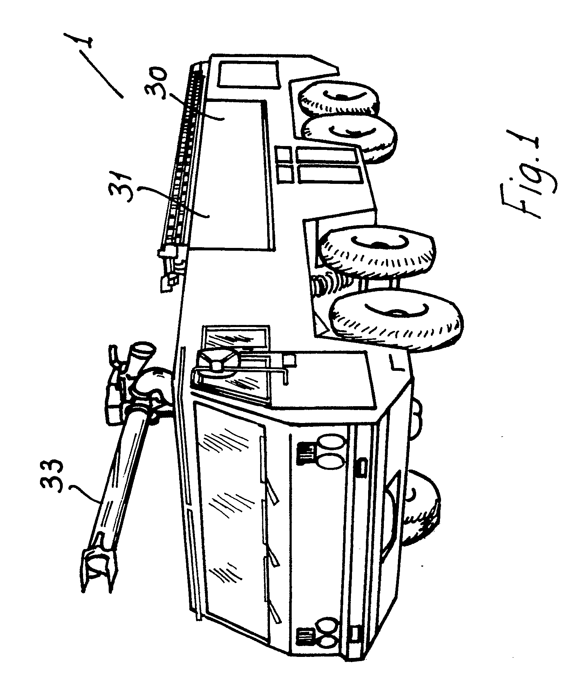

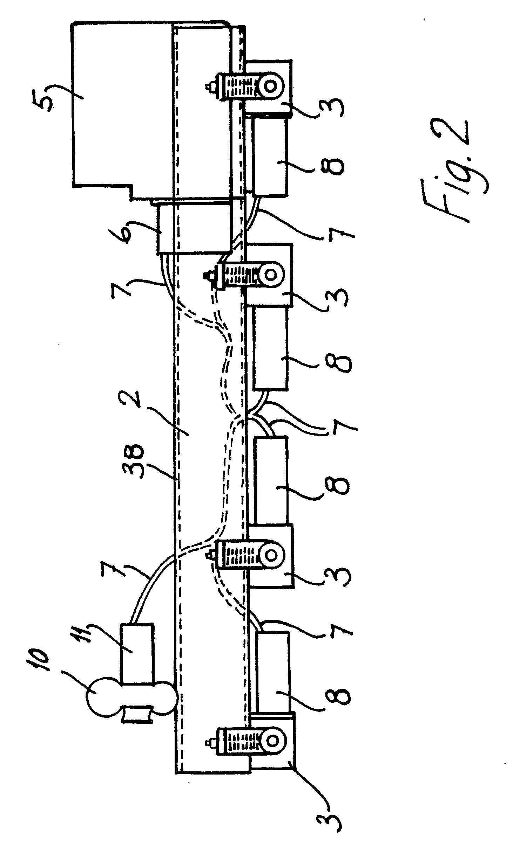

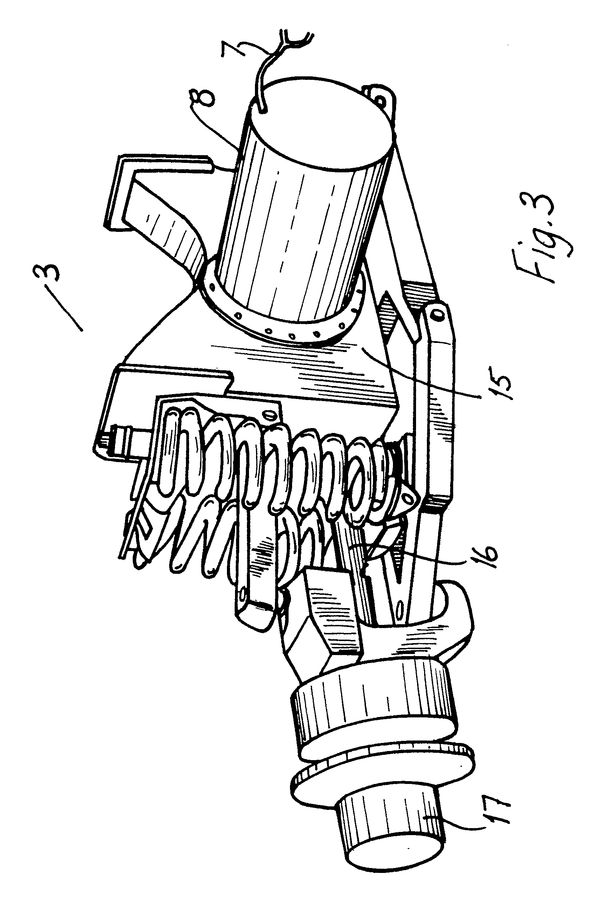

Referring to the drawings, and initially to Figs 1 to 3, there is illustrated an airport crash rescue vehicle according to the invention indicated generally by the reference numeral 1. Fig. 2 shows a chassis 2 of the airport crash rescue vehicle 1 on an underside of which are mounted four spaced-apart drive axles 3. A diesel engine 5 is mounted on the chassis 2 and drives an electric generator 6 which is also supported on the chassis 2 for generating an electric power supply. This electric generator 6 is electrically connected through electric cables 7 to traction motors 8 mounted on and drivably connected to the drive axles 3. A pump 10 is also mounted on the chassis 2 and is driven by a motor 11 which is powered by the electric generator 6. Other ancillary electrical equipment (not shown) such as floodlights, mounted on the vehicle is also powered by the electric generator 6. Tools such as cutting gear can also be powered by the generator 6 either directly or through a hydraulic or pneumatic system.

The arrangement of each drive axle 3 is fully described in European Patent Application No. 88303119.7, and briefly, it has an axle housing 15 having a differential gear assembly (not shown) which in this case is drive by the traction motor 8. A transverse hub drive shaft 16 drivably connects the differential gear assembly to an independently sprung hub unit 17 on which a wheel (not shown) is mounted.

A water tank 30 and a foam tank 31 are mounted together centrally on the chassis 2. The pump 10 delivers water and foam from the tanks 30, 31 to a spray monitor 33 mounted on a top of the vehicle 1. The tanks 30, 31 have a flat base which sits on a top 38 of the chassis 2 which forms a flat bed for the tanks 30, 31. Sides of the tanks 30, 31 may be corrugated for improved strength.

Conventional control means (not shown) is provided to regulate the speed and power output of each traction motor 8. The various traction motors 8 can be driven at different speeds and with varying power output. Controls for the pump motor 11 can be located at any convenient position or preferably at several control stations on the vehicle to allow operation of the pump 10 from the vehicle cab or from other control stations at each side of the vehicle. The control stations are electrically connected to synchronise the controls at the control stations. Electrical connections are easily routed between the control stations.

In use, the diesel engine 5 is run to operate the generator 6 which delivers power to the traction motors 8 to drive the wheels of the vehicle 1. The electric generator 6 and traction motors 8 may be either A.C. or D.C. machines and of any suitable voltage. The pump 10 can be operated from vehicle cab or from one of the other control stations to discharge a foam spray comprising a water/foam mix from the monitor 33. Alternatively just water can be discharged. Power supply to the pump motor 11 is independent of the power supply to the traction motors 8. The pump 10 can be operated while the vehicle 1 is either stationary or moving.

It will be appreciated that in some cases regenerative braking may be provided for the vehicle with a suitable storage battery system for enhanced acceleration and breaking of the vehicle.

It will also be appreciated that an advantage of this power transmission system over a conventional drive system is that the engine 5 can be mounted in the most convenient location on the chassis 2, at the front, rear or centre, and arranged either in-line, transversely or diagonally on the chassis 2. Further the engine 5 can be mounted on the chassis 2 as low as is permitted by ground clearance requirements and this will help to give the vehicle a low centre of gravity improving the stability of the vehicle particularly when manoeuvring at higher speeds.

It will be noted that any number of drive axles may be independently powered by the generator 6 as can other equipment such as pumps, rescue gear, lighting and the like. The pump 10 can be located in the most convenient position and orientation on the chassis without drive transmission constraints.

Many other types of drive axle may be used.

The traction motors 8 give a high torque at a low speed thus enabling the vehicle to be accelerated quickly from a standstill which is important to get to a crash site quickly. The traction motors have a high overload capacity.

It will be appreciated that as the connection between the generator 6 and traction motors 8 and pump motor 11 is simply by electric cables 7, these cables 7 can be easily routed along the chassis. There are no gear boxes, propeller shafts or other machinery projecting above the chassis 2 on the central portion of the chassis 2 on which the tanks are supported. Thus the tanks can be simply made of box construction having a substantially flat base which seats on a top 38 of the chassis 2 which forms a flat bed to receive the tanks 30, 31. This simplified construction of tank can be more cheaply and quickly produced and also will have increased load carrying capacity.

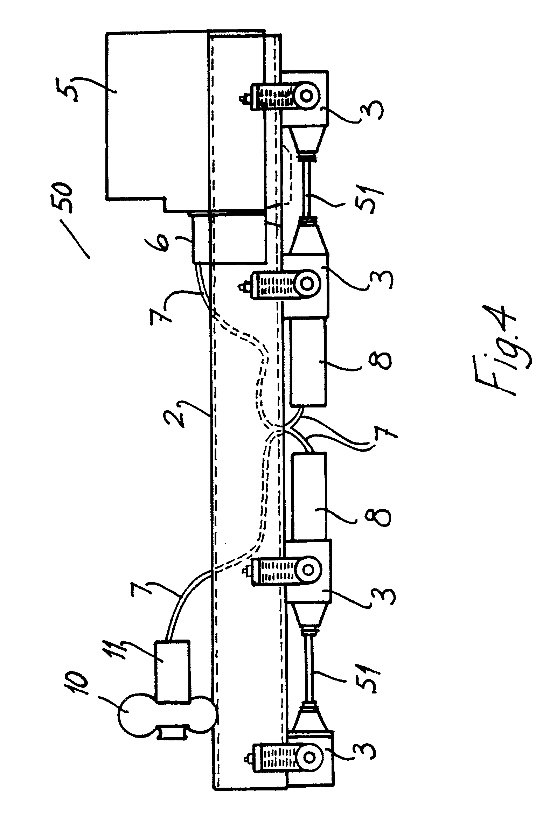

Referring now to Fig. 4 there is illustrated portion of another airport crash rescue vehicle indicated generally by the reference numeral 50. This is largely similar to the vehicle described previously with reference to Figs. 1 to 3 and like parts are assigned the same reference numeral. Four drive axles 3 are provided, however in this case, only two drive motors 8 are provided each driving an adjacent pair of drive axles 3 which are drivably connected in tandem. Each drive motor 8 is connected to one of its associated pair of drive axles 3, the drive axles 3 being drivably interconnected by a drive linkage comprising a propeller shaft 51 extending between the drive axles 3 for simultaneous operation of the drive axles 3.

While the specific embodiments described above relate to airport crash rescue vehicles the invention can be applied to other types of fire fighting vehicle and indeed it may also be possible to apply the invention to other vehicles having auxiliary machinery which can be electrically powered.

The invention is not limited to the embodiments hereinbefore described which may be varied in both construction and detail.

## Claims

1. A fire fighting vehicle (1) comprising a wheeled chassis (2), generator means (6) mounted on a chassis for generating an electric power supply, vehicle drive means having at least one traction motor (8) powered by the generator means (6), each traction motor (8) drivably connected to a wheel or wheels of the vehicle (1), and fire fighting machinery (10) on the vehicle powered by the generator means (6), the drive means and machinery (10) being operably independently and/or simultaneously as required.

2. A vehicle (1) as claimed in claim 1 wherein the generator means (6) has a common power output connected to the drive means and the machinery.

3. A vehicle (1) as claimed in claim 1 or claim 2 wherein the machinery comprises a pump (10).

4. A vehicle (1) as claimed in claim 3 wherein the vehicle (1) has a reservoir tank (30,31) for a fire extinguishing material mounted on the chassis (2), an inlet of the pump (10) being connected to an outlet of the tank (30,31).

5. A vehicle (1) as claimed in claim 3 or claim 4 wherein control means is provided for operation of the pump (10) independently of the drive means, the control means having a number of electrically interconnected pump control stations on the vehicle (1), each control station having controls for operating the pump (10).

6. A vehicle (1) as claimed in any preceding claim wherein control means is provided to regulate the speed and power output of each traction motor (8).

7. A vehicle (1) as claimed in any preceding claim wherein each traction motor (8) is mounted on a drive axle (3) on the chassis (2) to drive a pair of wheels on the axle (2).

8. A vehicle (1) as claimed in any preceding claim wherein a number of drive axles (3) are provided on the chassis (2) drivably connected in tandem, each axle (3) having a pair of wheels, a traction motor (8) being mounted on one of the drive axles (3) to drive wheels on all the interconnected axles (3).

9. A vehicle (1) as claimed in any preceding claim wherein the drive means includes a regenerative braking system.

10. A vehicle (1) comprising a wheeled chassis (2), generator means (6) mounted on the chassis (2) for generating an electric power supply, vehicle drive means having at least one traction motor (8) powered by the generator means (6), each traction motor (8) drivably connected to a wheel or wheels of the vehicle (1), and machinery on the vehicle (1) powered by the generator means (6), the drive means and machinery being operably independently and/or simultaneously as required.

Fig.1

EP 0 426 498 A1

Fig. 2

Fig.3

Fig.4

EP 0 426 498 A1

European Patent Office

**EUROPEAN SEARCH REPORT**

Application Number

**EP 90 31 2057**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-3 509 313 (KONRAD ROSENBAUER KG)<br>* claims 1, 4, 10; figures 1, 2, 9 *<br>— — — | 1-4,6-8, 10 | A 62<br>C 27/00<br>B 60 K 7/00 |
| Y | US-A-3 845 372 (RINGLAND)<br>* column 1, lines 8 - 19; figures 1, 2 *<br>— — — | 1-4,6-8, 10 | |
| A | FR-A-1 522 417 (COMPANIE GENERALE D ¾ ELEC-TRICITE)<br>* the whole document *<br>— — — | 1,6-8,10 | |
| A | DE-A-2 264 133 (KLAUE)<br>* page 4, paragraph 2; figure 2 *<br>— — — — — | 1 | |
| | | | **TECHNICAL FIELDS SEARCHED (Int. Cl.5)**<br><br>A 62 C<br>B 60 K |
| | The present search report has been drawn up for all claims | | |

| Place of search | Date of completion of search | Examiner |
|---|---|---|
| The Hague | 25 January 91 | DIMITROULAS P. |